# FASCICULE DE BREVET EUROPEEN

(11) **EP 0 385 853 B1**
(45) Date de publication et mention de la délivrance du brevet: **28.04.1993**
(21) Numéro de dépôt: 90400542.8
(22) Date de dépôt: 27.02.1990
(51) Int. Cl.: B29C 47/08

(54) **Dispositif de déplacement du fourreau d'une machine d'extrusion et machine d'extrusion munie d'un tel dispositif**
Vorrichtung zum Verschieben als Zylinders einer Extrudermaschine und mit einer solchen Vorrichtung versehene Extrudermaschine
Apparatus for moving the barrel of an extrusion machine, and extrusion machine provided with such an apparatus

(30) Priorité: 01.03.1989 FR 8902675
(43) Date de publication de la demande: 05.09.1990
(73) Titulaire: CLEXTRAL, F-92400 Courbevoie (FR)
(72) Inventeur: Bruyas, Laurent, F-43330 Pont Salomon (FR); Sabatier, Robert, F-42490 Fraisses (FR)
(74) Mandataire: Lanceplaine, Jean-Claude

(56) Documents cités:
- EP-A- 0 271 399
- DE-A- 2 320 556
- FR-A- 2 174 684
- FR-A- 2 297 131
- FR-A- 2 394 387

## Description

La présente invention a pour objet un dispositif de déplacement d'un fourreau d'une machine d'extrusion selon le préambule de la revendication 1.

Les machines d'extrusion ou extrudeuses sont généralement constituées d'une ou plusieurs vis entraînées en rotation à l'intérieur d'un fourreau allongé dans lequel sont ménagés des alésages pour le logement des vis.

Les vis sont munies, sur leur périphérie, de filets en hélice qui entraînent vers l'aval la matière introduite par une extrémité amont du fourreau. En jouant sur le pas des vis, on peut soumettre la matière à différents traitements, par exemple de trituration, de malaxage ou de compression. La matière est ainsi entraînée jusqu'à l'extrémité aval du fourreau qui peut être muni d'une filière d'extrusion ou bien d'un simple orifice de sortie dans le cas où la matière ne doit pas être soumise à une extrusion.

Pour faire varier le traitement réalisé au cours de l'avancement de la matière dans le fourreau, les vis sont constituées de zones successives ayant des filets de pas ou de formes différentes. Par exemple, on pourra utiliser des sections de convoyage à pas large ou des sections à pas resserré, ou même inversé pour réaliser un freinage et par conséquent une compression de la matière.

A cet effet, les vis peuvent être constituées de tronçons creux, juxtaposés et enfilés sur un arbre central relié à un moteur d'entraînement en rotation.

Dans ce type de machine, il est nécessaire de pouvoir nettoyer les vis et le fourreau notamment lorsque les machines sont utilisées successivement pour des procédés ou des matières différents. Il est d'autre part important de pouvoir effecteur rapidement le démontage des vis d'extrusion pour adapter le profil desdites vis au procédé mis en oeuvre et au type de matières traitées.

A cet effet, on connaît dans le FR-A-2.174.684, un dispositif de dégainement des vis d'extrusion d'une boudineuse par déplacement du fourreau.

Ce dispositif comprend une allonge guidée selon l'axe des vis et comportant au moins une glissière de guidage rectiligne des éléments de fourreau, des moyens d'immobilisation de cette allonge, un organe moteur à deux sens de marche et un écrou tournant actionné par cet organe moteur et une vis non rotative disposée selon l'axe longitudinal de la glissière, manoeuvrée par l'écrou et l'une de ses extrémités étant liée au bout extérieur de la glissière.

Mais, ce dispositif est difficilement adaptable aux machines d'extrusion de grandes dimensions. En effet, le poids important du fourreau provoque une flexion de la vis ce qui peut entraîner un coincement, sur ladite vis, de l'écrou d'entraînement du fourreau et ainsi bloquer le déplacement dudit fourreau.

La présente invention a pour but de s'affranchir des inconvénients précités.

Selon l'invention, le dispositif de déplacement du fourreau d'une machine d'extrusion comportant au moins une vis disposée dans le fourreau, une glissière mobile selon l'axe de la vis, et des moyens de déplacement longitudinal et successif dudit fourreau et de ladite glissière est caractérisé en ce que les moyens de déplacement longitudinal et successif du fourreau et de la glissière son constitués par au moins un vérin placé dans la glissière et comportant un cylindre solidaire de la glissière et un piston solidaire du fourreau par des organes de liaison, ledit vérin assurant d'une part le déplacement de la glissière par translation du cylindre par rapport au piston, puis le déplacement du fourreau sur ladite glissière par translation du piston par rapport au cylindre pour le dégagement de la vis et d'autre part le déplacement du fourreau par translation du piston par rapport au cylindre, puis le déplacement de la glissière par translation du cylindre par rapport au piston pour la remise en place dudit fourreau sur la vis.

La présente invention a également pour objet une machine d'extrusion munie d'un tel dispositif.

D'autres caractéristiques et avantages de la présente invention apparaîtront au cours de la description qui va suivre, faite en référence aux dessins annexés sur lesquels :
- La figure 1 est une vue schématique d'une machine d'extrusion munie du dispositif conforme à l'invention,
- la figure 2 est une vue en coupe et à plus grande échelle du dispositif de déplacement du fourreau de la machine d'extrusion,
- les figures 3 et 4 sont des vues schématiques montrant les étapes de déplacement du fourreau.

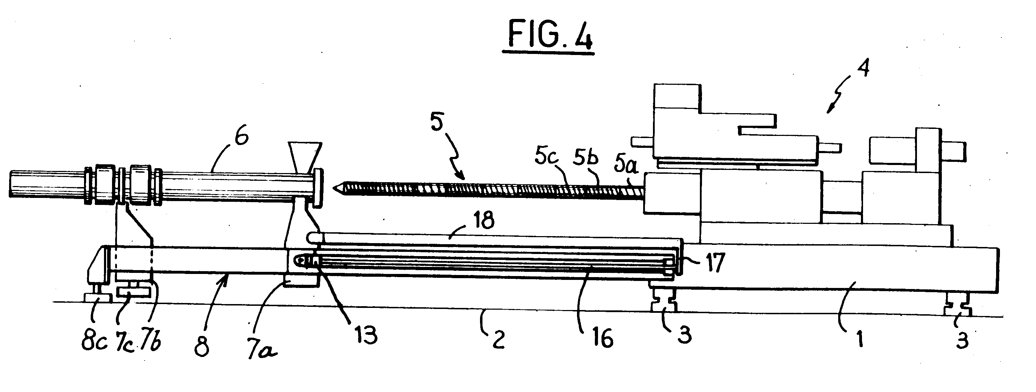

La machine de traitement de matières ou extrudeuse représentée sur les figures comprend un bâti 1 reposant sur le sol 2 par l'intermédiaire des pieds 3 et supportant les différents organes 4 de commande, de régulation, et d'entraînement d'au moins une vis 5 (figure 4) à l'intérieur d'une enceinte allongée formant un fourreau 6 qui l'enveloppe.

La vis 5 est munie de filets ou autres organes périphériques et peut être constituée par un empilage de tronçons 5a, 5b, 5c...

Le fourreau 6 est porté par des supports 7a et 7b qui sont susceptibles de coulisser sur une glissière 8. Le support 7b comporte au moins un pied escamotable 7c.

La glissière 8 est susceptible de coulisser dans le bâti 1 de la machine d'extrusion et comporte à cet effet une partie 8a pénétrant dans ledit bâti et une partie 8b débordant à l'extérieur du bâti.

L'extrémité de la glissière 8, opposée au bâti 1, comporte au moins un pied escamotable 8c.

La machine d'extrusion comprend également des moyens 10 de déplacement longitudinal et successif, selon l'axe de la vis 5, du fourreau 6 et de la glissière 8.

Ces moyens 10 de déplacement sont constitués par au moins un vérin 11 disposé à l'intérieur de la partie 8a de la glissière 8.

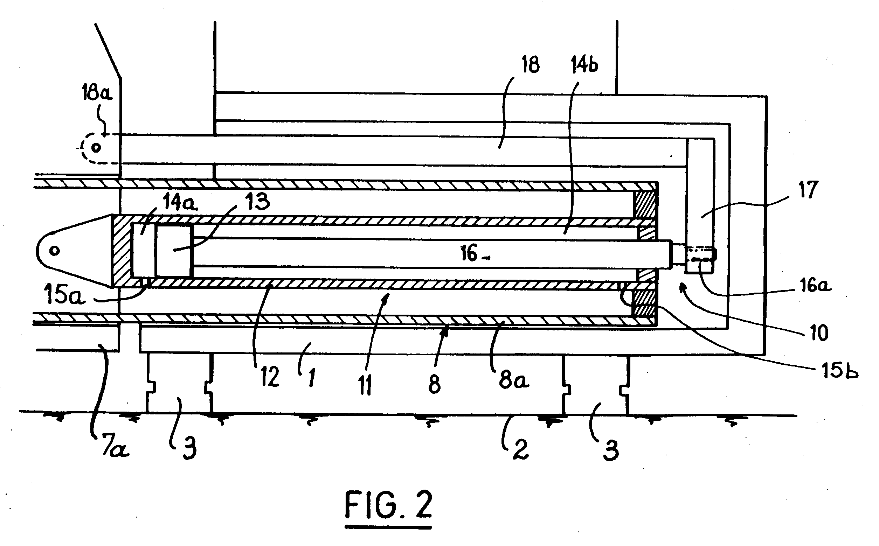

Le vérin 11 (figure 2) comporte un cylindre 12 solidaire de la glissière 8 et un piston 13 qui détermine à l'intérieur dudit cylindre deux chambres 14a et 14b raccordées, à un dispositif d'alimentation en fluide sous pression non représenté, respectivement par un orifice 15a et 15b.

Le piston 13 est monté à l'extrémité d'une tige 16 qui débouche à l'extérieur du cylindre 12.

L'extrémité 16a de la tige 16, débouchant à l'extérieur du cylindre 12, est reliée par une entretoise 17 à une tige 18 horizontale et parallèle à la tige de piston 16. L'extrémité 18a de la tige 18 opposée à l'entretoise 17 est fixée sur le support 7a supportant le fourreau 6.

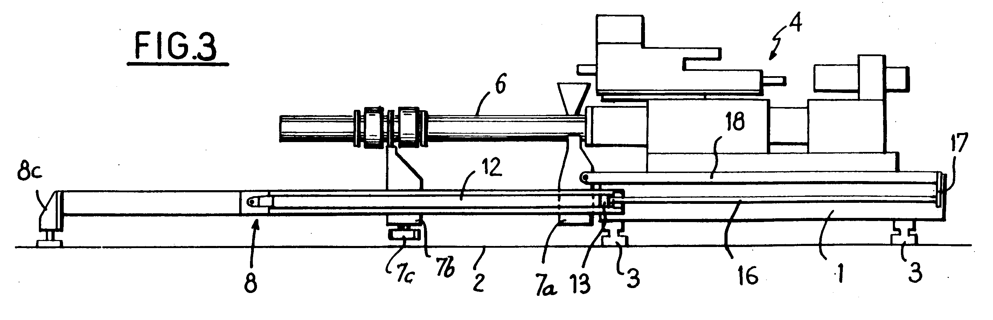

Le fonctionnement du dispositif va maintenant être décrit en se référant aux figures 3 et 4.

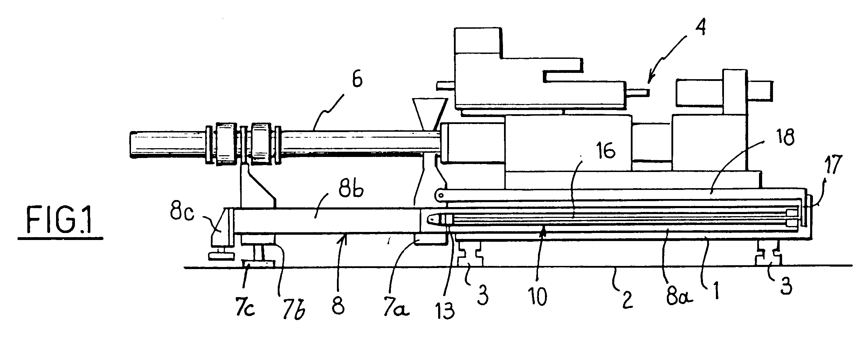

En position normale, la glissière 8 est en partie escamotée dans le bâti 1 de la machine d'extrusion, comme représenté à la figure 1, et le fourreau 6 est accouplé à la machine d'extrusion proprement dite par un système de verrouillage non représenté.

Le mouvement de translation de la glissière 8 est donné par l'intermédiaire du vérin 11. Dans un premier temps, le pied escamotable 7c est en appui sur le sol 2 et le pied escamotable 8c est en position relevée.

La chambre 14a du vérin est alimentée en fluide sous pression par l'orifice 15a ce qui provoque le déplacement du cylindre 12 et de la glissière 8, car le piston 13 est maintenu en position fixe par l'ensemble constitué par la tige de piston 16, l'entretoise 17, la tige 18 et le support 7a, qui est lui-même maintenu par le fourreau 6 verrouillé sur la machine d'extrusion.

La glissière 8, pendant son déploiement, est guidée par les supports 7a et 7b et, en fin de course, elle est immobilisée en translation par des moyens de verrouillage non représentés. Le pied 8c est déployé pour venir en contact avec le sol 2 (figure 3).

Ensuite, le pied 7c est escamoté, le fourreau 6 est libéré de la machine d'extrusion et la chambre 14b est alimentée en fluide sous pression par l'orifice 15b ce qui provoque le déplacement longitudinal du piston 13. Le piston 13 entraîne, par l'intermédiaire de la tige de piston 16, de l'entretoise 17, de la tige 18 et du support 7a, le fourreau 6 qui dégage ainsi la vis 5 permettant le nettoyage ou une intervention sur celle-ci (figure 4).

Au cours de leur déplacement, les supports 7a et 7b sont guidés par la glissière 8.

La remise en place du fourreau 6 s'effectue en réalisant les opérations inverses, c'est-à-dire en alimentant en fluide sous pression successivement les chambres 14a et 14b du vérin 11.

## Revendications

1. Dispositif de déplacement du fourreau (6) d'une machine d'extrusion (1) comportant au moins une vis (5) disposée dans l'axe du fourreau 6), une glissière (8) mobile selon l'axe de la vis (5) et des moyens (10) de déplacement longitudinal et successif dudit fourreau (6) et de ladite glissière (8), caractérisé en ce que les moyens (10) de déplacement longitudinal et successif du fourreau (6) et de la glissière (8) sont constitués par au moins un vérin (11) placé dans la glissière (8) et comportant un cylindre (12) solidaire de la glissière (8) et un piston (16) solidaire du fourreau (6) par des organes de liaison (16, 17, 18), ledit vérin (11) assurant d'une part le déplacement de la glissière (8) par translation du cylindre (12) par rapport au piston (16), puis le déplacement du fourreau (6) sur ladite glissière (8) par translation du piston (16) par rapport au cylindre (12) pour le dégagement de la vis (5) et d'autre part le déplacement du fourreau (6) par translation du piston (16) par rapport au cylindre (12), puis le déplacement de la glissière (8) par translation du cylindre (12) par rapport au piston (16) pour la remise en place dudit fourreau sur la vis (5).

2. Dispositif selon la revendication 1, caractérisé en ce que le fourreau (6) est supporté par des supports (7a-7b) guidés par la glissière (8).

3. Machine d'extrusion équipée d'un dispositif de déplacement du fourreau selon les revendications 1 et 2.

## Patentansprüche

1. Vorrichtung zum Bewegen des Futters (6) einer Extrusionsmaschine (1) mit wenigstens einer Schraube (5), die in der Achse des Futters (6) angeordnet ist, einer Gleitschiene (8), die beweglich entlang der Achse der Schraube (5) ist und mit Einrichtungen (10) zum Längsbewegen und aufeinanderfolgenden Bewegen des Futters (6) und der Gleitschiene (8), dadurch gekennzeichnet, daß die Einrichtungen (10) zum Längs- und aufeinanderfolgenden Bewegen des Futterals (6) und der Gleitschiene (8) gebildet werden aus wenigstens einem Stelltrieb (11), der in der Gleitschiene (8) angeordnet ist und wenigstens einen Zylinder (12) aufweist, der mit der Gleitschiene (8) verbunden ist und einen Kolben (16) aufweist, der mit dem Futter (6) durch Verbindungsorgane (16, 17, 18) verbunden ist, wobei der Stelltrieb (11) einerseits die Bewegung der Gleitschiene (8) durch Translation des Zylinders (12) bezüglich des Kolbens (16), sodann die Bewegung des Futters (6) auf der Gleitschiene (8) durch Verschieben des Kolbens (16) bezüglich des Zylinders (12) für die Freigabe der Schraube (5) und andererseits die Bewegung des Futters (6) durch Translation des Kolbens (16) bezüglich des Zylinders (12), und sodann die Bewegung der Gleitschiene (8) durch Translation des Zylinders (12) bezüglich des Kolbens (16) für die Rückstellung an Ort und Stelle des Futters auf der Schraube (5) sicherstellt.

2. Vorrichtung nach Anspruch 1, dadurch gekennzeichnet, daß das Futter (6) von Lagern (7a-7b) getragen wird, die von der Gleitschiene (8) geführt werden.

3. Extrusionsmaschine, ausgerüstet mit einer Bewegungsvorrichtung des Futters nach den Ansprüchen 1 und 2.

## Claims

1. Apparatus for moving the barrel (6) of an extrusion machine (1), comprising at least one screw (5) located along the axis of the barrel (6), slide means (8) movable in the axial direction of the screw (5) and means (10) for longitudinally and successively moving the barrel (6) and the said slide means (8), characterised in that the means (10) for longitudinally and successively moving the barrel (6) and slide means (8) consist of at least one jack (11) placed in the slide means (8) and comprising a cylinder (12) connected to the slide means (8) and a piston (16) connected to the barrel (6) by connecting means (16,17,18), said jack (11) effecting, on the one hand, movement of the slide means (8) by a translatory movement of the cylinder (12) relative to the piston (16), then movement of the barrel (6) on said slide means (8) by a translatory movement of the piston (16) relative to the cylinder (12) for disengaging the screw (5) and, on the other hand, movement of the barrel (6) by a translatory movement of the piston (16) relative to the cylinder (12), then movement of the slide means (8) by a translatory movement of the cylinder (12) relative to the piston (16) in order to reposition said barrel on the screw (5).

2. Apparatus according to claim 1, characterised in that the barrel (6) is supported by supports (7a-7b) guided by the slide means (8).

3. Extrusion machine fitted with an apparatus for moving the barrel according to claims 1 and 2.
